# EUROPÄISCHE PATENTSCHRIFT

(11) **EP 3 471 914 B1**
(45) Veröffentlichungstag und Bekanntmachung des Hinweises auf die Patenterteilung: **13.09.2023**
(21) Anmeldenummer: 17719620.1
(22) Anmeldetag: 27.04.2017
(51) Int. Cl.: B23P 15/10

(54) **STAHLBLECHBREMSKOLBEN FUR EINE HYDRAULISCHE BREMSE**
STEEL PLATE BRAKE PISTON FOR A HYDRAULIC BRAKE
PISTONS DE FREIN EN TÔLE D'ACIER POUR UN FREIN HYDRAULIQUE

(30) Priorität: 16.06.2016 DE 102016210817
(43) Veröffentlichungstag der Anmeldung: 24.04.2019
(73) Patentinhaber: Continental Automotive Technologies GmbH, 30165 Hannover (DE); Erdrich Umformtechnik GmbH, 77871 Renchen-Ulm (DE)
(72) Erfinder: SCHMIDT, Tobias, 65199 Wiesbaden (DE); WÜRZ, Matthias, 61440 Oberursel (DE); LEIDECKER, Norbert, 65760 Eschborn (DE); KLACIK, Martin, 040 20 Kosice (SK); MÜLLER, Matthias, 77704 Oberkirch (DE); ZEIBIG, Uwe, 77855 Achern (DE); LORENZ, Ulrich, 99610 Sömmerda (DE); BAUERSFELD, Rico, 06578 Kannawurf (DE)
(74) Vertreter: Continental Corporation
(86) Internationale Anmeldenummer: PCT/EP2017/060109
(87) Internationale Veröffentlichungsnummer: WO 2017/215826

(56) Entgegenhaltungen:
- WO-A1-01/77547
- DE-A1- 4 003 731
- DE-U1- 29 815 358
- US-A- 4 193 179
- US-A1- 2004 216 604
- US-A1- 2007 199 774

## Beschreibung

Die Erfindung betrifft einen kaltumgeformten Stahlbremskolben 1 für eine hydraulische Scheibenbremse 12, mit Aufbau als einseitig offener Topf umfassend Boden 2 und Wand 3 einschließlich Innen- und Außenwandungen 4,5. Der Kolbenaußendurchmesser D ist im Wesentlichen konstant, rotationssymmetrisch zur Kolbenlängsachse A gerichtet. Kolbenwandstärke s und Kolbendurchmesser D,d sind über Wandabschnitte 9,10 abschnittweise variiert, und zur Kolbenlängsachse A im Wesentlichen parallel abgestreckt gerichtet ausgeformt. Dabei ist der Wandabschnitt 10 am offenen Ende, endseitig, arrangiert und der Wandabschnitt 9 befindet sich neben dem Boden 2. Mit anderen Worten schließt sich an den Wandabschnitt 9 ein Übergang mit dem Boden 2 an, welcher orthogonal rechtwinklig zur Kolbenlängsachse A ausgeprägt ist. Die Außenwandung 5 verfügt endseitig über eine radial einwärts eingestülpte Nut 6, die nach radial außen offen ist und radial innen einen Nutwulstvorsprung 7 ausbildet, und wobei die offene Seite vom Topf als Auflager für eine Reibbelagrückenplatte 11 endet, und sich dies Auflager als ebene Kolbenstirnfläche 8 orthogonal-rechtswinklig zu der Kolbenlängsachse A erstreckt, sowie mit integrierten Schnittstellen die a) zur Fixierung zwischen Rückenplatte 11 und Stahlbremskolben 1 und b) als Stützlager zur Befederung vom Reibbelag dienen.

Die DE 40 03 731 A1 bezieht sich auf einen kaltverformten Kolben für eine hydraulisch betätigbare Bremse, der durch ein Pressverfahren gebildet ist, mit abgestuftem Kolbenaußendurchmesser, umfassend eine am Umgang umlaufend eingeformte Nut, die durch Einpressen derart in die Kolbenwandung eingebracht ist, dass die Wandstärke des Kolbens in Höhe der Nut nicht gegenüber der übrigen Wandstärke geschwächt, sondern verstärkt ist. Zwecks Rasthalterung zwischen einem Bremsklotz und dem Kolben können Federbeine als Haltemittel hinter eine Konsole von der Nut derart greifen, dass der Bremsklotz rastend am Kolben gehalten ist.

Die WO 01/77 547 A1 betrifft einen Bremskolben umfassend eine endseitige Wanddickenverstärkung und mit einer zerspanungstechnisch eingedrehten Nut, sodass im Kolbeninnenraum kein Nutwulstvorsprung vorliegt. Weiterhin sind im Kolbeninnenraum zwei zylindrische Kolbeninnenwandbereiche per Wandkonifizierung verbunden, sodass in Konsequenz auch keine Schnittstellenfunktion ersichtlich ist. Der Kolbeninnendurchmesser ist völlig ohne Rückversatz unmittelbar angrenzend an die Kolbenmündung flaschenhalsartig reduziert ausgeführt. Reibbelagradialbefederung und auch Stützlager fehlen gänzlich.

Die US 2007/199774 Al bezieht sich ausgehend von einem Stahlblock auf einen Schmiedefertigungsprozess für einen Bremskolben, welcher keineswegs mit einem Stahlblechbremskolben vermengt werden kann. Denn es liegt ein unterschiedlich arrangierter Bremskolbenschmiedeprozess bei unmittelbar flaschenhalsartig verengter Kolbenmündung vor, und wobei kein konstanter Bremskolbenaußendurchmesser gegeben ist. Diesem Schmiedebremskolben fehlt jegliche Radialbefederung, mit der Konsequenz, dass keinerlei zugeordnete Schnittstelle definiert ist.

Die US 4, 193, 179 A beschreibt ein Herstellungsverfahren für einen besonders leichtgewichtig, beidends mit offenen Hohlräumen - also bodenlos - durch Querwalzen umgeformt gefertigten, Scheibenbremskolben aus einem extrudierten Stahlrohling mit einer Kolbenwandung umfassend einends die offene Kolbennase und anderenends den offenen Kolbenrücken, und mit zwischen diesen Enden durchgehend eingefügtem Querabschnitt, sowie umfassend auf der Kolbenaussenwandung eine radial einwärts rollierte Nut die an der Kolbeninnenwandung als vorgewölbte Kontur mit minimierter Kolbenwandstärke B definiert ist.

Ein gattungsgemäßer sowie preiswert, leicht und stabil in Kaltumformtechnologie ausgeführter Stahlbremskolben geht beispielhaft aus der EP 0 877 871 B1 hervor. Der gattungsgemäße Stahlbremskolben bietet mehrere Kooperationsschnittstellen in Bezug zum Scheibenbremsbelag. Dazu gehört am offenen Ende ein besonderes stirnseitiges Auflager zur optimierten Anlage zwischen Scheibenbremsbelagrückenplatte und Kolbenstirnfläche. Ein Kolbeninnenraum bietet nebeneinander zwei eingeprägte Schultern, die in Kooperation mit der Reibbelagbefederung stehen, und wobei die Fixierung zwischen Scheibenbremsbelag und Stahlbremskolben ermöglicht ist.

Die Aufgabe der vorliegenden Erfindung besteht demgegenüber darin, einen weiterhin verbesserten Stahlbremskolben neuer Generation vorzulegen, welcher eine fortgesetzte Reduktion vom Bauaufwand einschließlich eine preiswerte Verbesserung seiner verschiedenen Schnittstellen bei reduziertem Gewicht ermöglicht.

Die Aufgabe wird erfindungsgemäß gelöst, indem der minimale Kolbeninnendurchmesser dᵢₘᵢₙ zumindest um ein Mehrfaches der minimalen Kolbenwandstärke sₘᵢₙ in Richtung Boden 2 rückversetzt verschoben vorliegt, und wobei der minimale Kolbeninnendurchmesser dᵢₘᵢₙ vom Nutwulstvorsprung 7 gebildet ist, und indem der endseitige Wandabschnitt über einen kleineren Kolbeninnendurchmesser dᵢ verfügt als der bodenseitige Wandabschnitt, wobei der Nutwulstvorsprung 7 den minimalen Kolbeninnendurchmesser dᵢₘᵢₙ definiert.

Besonders bevorzugt ist ein definiertes Kolbenwandstärkenverhältnis nämlich ein Quotient der Wandstärke am Boden s_{b} / minimale Kolbenwandstärke sₘᵢₙ also s_{b}/sₘᵢₙ mit 1,4 - 2,1 angestrebt.

Weiterhin vorteilhafte Merkmale, Wirkungen und Ausgestaltungen der Erfindung gehen aus nachfolgender Beschreibung anhand der Zeichnung wie folgt im Einzelnen hervor. In der Zeichnung zeigt:

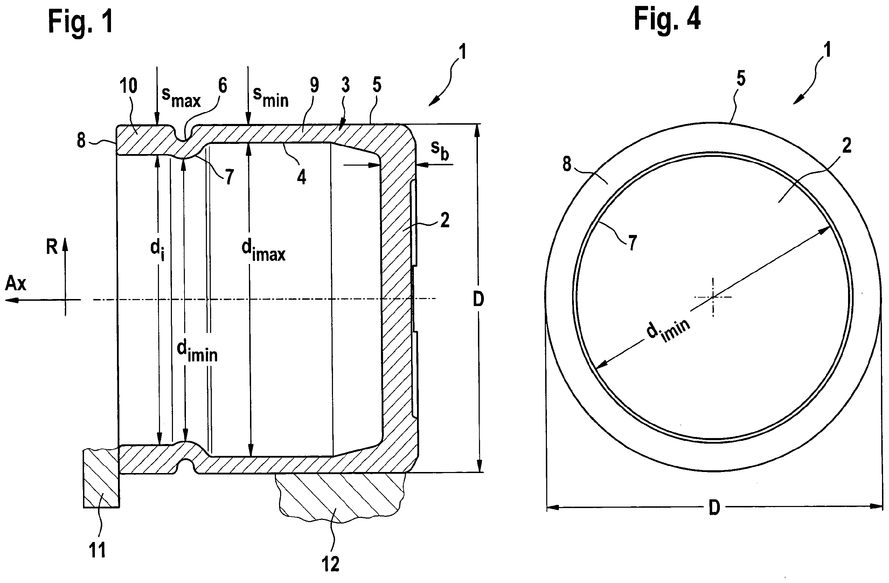

Fig. 1 einen erfindungsgemäßen Stahlbremskolben 1 im Schnitt,

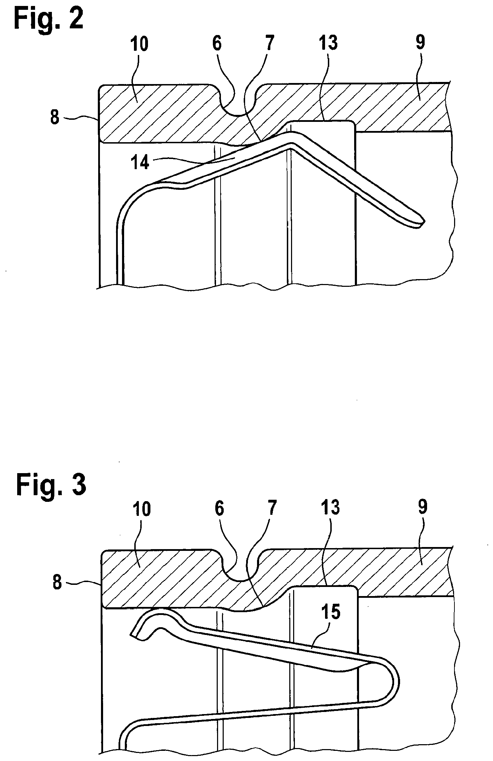

Fig. 2 ein vergrößerter endseitiger Teil einer anderen Variante mit einer zusätzlich von radial innen eingebrachten Nut 13 zwischen Nutwulstvorsprung 7 und bodenseitigem Wandabschnitt 9, teilweise, und im Halbschnitt vergrößert, zur Verdeutlichung der integralen Schnittstellen zwischen Stahlbremskolben 1 und Haltefederschenkel 14 (nur einer von zwei einander diametral gegenüberliegend arrangierten Federschenkeln ist dargestellt),
Fig. 3 die Variante wie in Fig. 2 im Schnitt - jedoch um 90° am Umfang versetzt - zur Verdeutlichung der integralen Schnittstelle zum Radialfederschenkel 15, und
Fig. 4 der Stahlbremskolben wie in Fig. 1 in Ansicht von Links.

Die Erfindung verzichtet auf einen radial einwärts abgewinkelten Randbogen (Kragen) zur Ausbildung einer Hinterschneidung am offenen Ende und verzichtet im Wesentlichen auch auf dessen spanende Nacharbeit. Stattdessen erfolgt ein entfeinerter, fehlertolerant ausgebildeter konstruktiver Aufbau im Zusammenhang mit vergleichsweise grob ausgeführter Umformtoleranz beziehungsweise grob eingestellten Toleranzfeldern, die sich beim Tiefziehprozess einstellen. Mit Hilfe von einer neuartig verbesserten Schnittstellenperipherie wird ein kaltumgeformter, gewichts- und steifigkeitsoptimierter Stahlbremskolben 1 in standardisierter Geometrie vorgelegt, welcher zudem über eine erweiterte Kompatibilität mit unterschiedlich präzise tolerierten Reibbelägen verfügt. Die periphären Freiheitsgrade zwecks Paarung mit unterschiedlich gestalteten oder maßtolerierten Reibbelägen sind folglich erweitert. Das erfindungsgemäße Design erlaubt daher insbesondere eine Variation bzw. Designveränderung betreffend die Federschenkel bzw. Maßvariation in Hinblick auf die Eintauchtiefe von der Belaghaltefeder, beziehungsweise die Dicke einer Rückenplatte 11. Mit anderen Worten ist das erfindungsgemäße Schnittstellendesign so arrangiert, dass in der Kooperation mit den peripheren Bauteilen eine größere Vielfalt, wie insbesondere unterschiedlich weit eingreifende Eintauchtiefen vom Federschenkel 14,15 einer Belaghaltefeder toleriert sind. Demzufolge wird ein kostengünstiger Austauschverbau in Verbindung mit graduell unterschiedlichen, wie insbesondere grob tolerierten, Bauteilen in der Kolbenperipherie erleichtert.

Ein besonders günstiges Schnittstellendesign wird erreicht, indem eine axiale Projektion vom minimalen Kolbeninnendurchmesser dᵢₘᵢₙ in der Radialrichtung R betrachtet nach radial innen versetzt, außerhalb von der Kolbenstirnfläche 8 platziert, vorgesehen ist.

Ein besonders rationeller und stabiler Aufbau wird erfindungsgemäß erzielt, indem der Nutwulstvorsprung 7 den minimalen Kolbeninnendurchmesser dᵢₘᵢₙ definiert. Der Nutwulst verbindet zwei rohrförmig-zylindrische, koaxial arrangierte Wandabschnitte 9,10 miteinander, die über einen einheitlichen Außendurchmesser D bei unterschiedlichen Innendurchmessern dᵢ, dᵢₘₐₓ verfügen, so dass diese gewissermaßen zueinander abgestuft vorliegen. Dabei verfügt der endseitig allokierte Wandabschnitt 10 über den kleineren Kolbeninnendurchmesser dᵢ im Vergleich mit dem bodenseitig allokierte Wandabschnitt 9 welcher über den maximalen Kolbeninnendurchmesser dᵢₘₐₓ verfügt. In diesem Kontext ist folgerichtig definiert, dass der bodenseitige Wandabschnitt 9 mit sₘᵢₙ über die minimale Wandstärke verfügt im Vergleich zum endseitigen Wandabschnitt 10 mit der der Wandstärke Sₘₐₓ. Die Außendurchmesser der beiden Wandabschnitte 9,10 sind weitestgehend identisch in einer gemeinsamen Flucht vorgesehen. Demzufolge ist die Abfolge der Wandstärken, ausgehend von dem Boden 2, dem folgenden bodenseitigen Wandabschnitt 9, und schließlich dem endseitigen Wandabschnitt 10 mit der Reihenfolge - dick-dünn-dick - ausgestaltet.

Eine besonders effiziente Werkstoffausnutzung bei günstiger Schnittstellengestaltung ist dadurch gekennzeichnet, dass die besagten Durchmesserunterschiede von den unterschiedlichen Wandabschnitten 9,10 jeweils mindestens etwa 2mm betragen, und wobei die rohrförmig-glatte Länge vom endseitigen Wandabschnitt 10 mindestens etwas 5 mm beträgt.

In Werkstoffakkumulation, sowie zur weiter verbesserten Kooperation mit Federschenkeln 14,15 am Reibbelag ist es grundsätzlich möglich, dass der bodenseitige Wandabschnitt 9 zusätzlich über eine von radial innen nach radial auswärts gerichtet eingeprägte Nut 13 verfügt, welche mit sichtlich geringem axialem Abstand zu dem Nutwulstvorsprung 7, in Richtung Boden 2 versetzt, vorgesehen ist.

Die besondere Art und Weise der Kolbenperipheriegestaltung ermöglicht erstmals eine besonders toleranzunempfindliche Aufnahme einer Belaghaltefeder. Durch die besondere Formgebung der Kolbenwandung - insbesondere der Innenwandung 4 - ist eine sichere Schnittstelle mit Aufnahme einer Belaghaltefeder gewährleistet, und zwar innerhalb großräumiger Grenzen und unabhängig davon, wie präzise die Federschenkel 14,15 oder wie dick die Rückenplatte 11 im Einzelnen toleriert ausgeführt ist. Insbesondere ermöglicht die Erfindung einen maximalen Freiheitsgrad in Hinblick auf unterschiedliche Rückenplattengestaltungen wie insbesondere eine Variation der Dicke von einem ggf. verwendeten Dämpfungsblech (Shim) wie auch Anforderungen an die zulässige Flächenpressung wenn die Kolbenstirnfläche 8 auf der Rückenplatte 11 aufsitzt.

Erfindungsgemäß ist die stirnseitige Kreisringfläche (Kolbenaufstandsfläche) an der offenen Seite des Stahlbremskolbens 1 inetwa mit 30 % von der Kolbenbodenfläche ausgelegt. Unter der Vorgabe vom Nennkolbendurchmesser D folgert daher unmittelbar der auszuwählende Kolbeninnendurchmesser di aus der oben genannten Vorgabe der Flächenverhältnis zwischen Bodenfläche und Kolbenstirnfläche 8. Um eine stets passende axiale Positionierung einer Belaghaltefeder über sämtliche Bremskolbendurchmesservarianten (Baukastensystem) zu ermöglichen, soll ein konstant gehaltener Kolben-Innendurchmesser (d.h. Klemmdurchmesser) di im Klemmbereich der Belaghaltefeder über eine axiale Mindestlänge über eine Länge von mindestens etwa > 5 mm vorliegen. Im Anschluss nach dieser zylindrischen Länge vom Kolbendurchmesser di ist die Hinterschneidung anhand vom Nutwulstvorsprung 7 mit dem nachfolgend maximal definierten Kolbeninnendurchmesser dᵢₘₐₓ vorgegeben. Dabei ist der Vorsprung quasi parasitär infolge vom Nutwulstvorsprung 7 ausgebildet. Im Anschluss an den Nutwulstvorsprung 7 liegt der bodenseitige Wandabschnitt 9 vor, welcher über den deutlich erweiterten Innendurchmesser dᵢₘₐₓ verfügt. Dabei beträgt der Durchmesserunterschied mindestens inetwa 2,5 mm.

Der bodenseitige, erweiterte also größere, und spanlos umgeformt erhaltene Kolben-Innendurchmesser dᵢₘₐₓ ist im Durchmesser bis zum Übergang in den Kolbenboden 2 weitestgehend konstant, sowie so dimensioniert, dass die notwendige Steifigkeit des Stahlbremskolbens 1 bei gleichzeitig reduzierter Kolbenmasse vorliegt.

Indem der Nutwulstvorsprung 7 eine Doppelfunktion ((a) kaltverfestigter Versteifungsring b) Wandvorsprung) wahrnimmt, wird eine quasiparasitäre Verklemmung einer Belaghaltefeder am Nutwulstvorsprung 7 ermöglicht. Dies hat den Vorteil, dass auf einen besonderen, kragenförmig abgewinkelten, Randbogen bzw. auf die Fertigung der Nut 13 verzichtet werden kann.

Ein erfindungsgemäß kaltumgeformter Stahlbremskolben, insbesondere Stahlblechbremskolben 1, ist neben der Außenwandung 5 (Außendurchmesser-Bearbeitung) nur auf seiner Kolbenstirnfläche 8 spanend zu bearbeiten.

Grundsätzlich wichtige Eckpunkte der Erfindung sind wie folgt:
1. Kolbenstirnfläche beträgt nur ca. 30 % von der Kolbenbodenfläche
2. Kolbeninnendurchmesser di über einer axial-zylindrisch definierte Länge >5mm.
3. Im Kolbeninneren ist am Wandabschnitt 10 ein Hinterschnitt erzeugt, der durch den Nutwulstvorsprung 7 gebildet ist, welcher sich an einen endseitigen Klemmdurchmesser di anschließt. Der Nutwulstvorsprung 7 verbindet den Wandabschnitt 10 mit dem Wandabschnitt 9, welcher im Vergleich zu dem Nutwulstvorsprung 7 über einen deutlich vergrößerten (+ min. 2,5 mm größer) Kolbeninnendurchmesser dᵢₘₐₓ verfügt.
4. Der maximale Kolbeninnendurchmesser dᵢₘₐₓ ist bei gegebenem Kolbennenndurchmesser D in seiner Wandstärke s genau so stark dimensioniert ausgeführt, wie dies zwingend notwendig ist, damit sich bei noch ausreichender Steifigkeit und Wandstärke s unter Einbezug von Umformgrad und Kaltverfestigung eine gleichzeitig reduzierte Masse vom Stahlbremskolben 1 ergibt. Dabei sind im bodenseitigen Wandungsabschnitt 9 sowohl Innendurchmesser dᵢₘₐₓ als auch Wandstärke sₘᵢₙ im Wesentlichen konstant definiert , bis sich ein allmählicher Übergangsabschnitt mit vergrößerter Wandstärke s im Übergang zum Boden 2 anschließt.

### Bezugszeichenliste

1 Stahlbremskolben
2 Boden
3 Wand
4 Innenwandung
5 Außenwandung
6 Nut
7 Nutwulstvorsprung
8 Kolbenstirnfläche
9 Wandabschnitt
10 Wandabschnitt
11 Rückenplatte
12 Scheibenbremse
13 Nut
14 Federschenkel
15 Federschenkel

A Kolbenlängsachse
D (Kolben)Nenndurchmesser
dᵢₘᵢₙ minimaler Innendurchmesser
dᵢₘₐₓ maximaler Innendurchmesser
dᵢ Innendurchmesser
s Kolbenwandstärke
sₘᵢₙ minimale Wandstärke
sₘₐₓ maximale Wandstärke
sb Wandstärke vom Boden
Ax Axialrichtung
R Radialrichtung

## Patentansprüche

1. Kaltumgeformter Stahlbremskolben (1) für eine hydraulische Scheibenbremse, mit Aufbau als einseitig offener Topf umfassend Boden (2) und Wand (3) einschließlich Innenwandung (4) und Außenwandung (5), mit im Wesentlichen rotationssymmetrisch zur Kolbenlängsachse (A) gerichteter, sowie mit abschnittsweise variierter Wandstärke (s) bei unterschiedlich variiertem Innendurchmesser di, wobei die zur Kolbenlängsachse (A) im Wesentlichen parallel abgestreckt gerichtet geformten Wandabschnitte (9,10) an den orthogonal rechtwinklig zur Kolbenlängsachse (A) ausgeprägten Boden (2) anschließen, und wobei die Außenwandung (5) am endseitigen Wandabschnitt (10) über eine radial einwärts einrollierte Nut (6) verfügt, die nach radial außen offen ist, und radial innen einen Nutwulstvorsprung (7) ausbildet, und wobei die offene Seite vom Topf als Auflager für eine Reibbelagrückenplatte endet, und sich dies Auflager als ebene Kolbenstirnfläche (8) orthogonal-rechtswinklig zu der Kolbenlängsachse (A) erstreckt, sowie mit integrierten Schnittstellen die a) zur Fixierung zwischen Reibbelag und Stahlbremskolben (1) und b) als Stützlager zur Befederung vom Reibbelag dienen, wobei der minimale Kolbeninnendurchmesser (dᵢₘᵢₙ), ausgehend von der Kolbenstirnfläche (8), um ein Mehrfaches der Kolbenwandstärke (s) in Richtung Boden (2) axial rückversetzt verschoben vorliegt, und wobei der minimale Kolbeninnendurchmesser (dᵢₘᵢₙ) vom Nutwulstvorsprung (7) gebildet ist, **dadurch gekennzeichnet, dass** der endseitige Wandabschnitt (10) über einen kleineren Kolbeninnendurchmesser (dᵢ) verfügt als der bodenseitige Wandabschnitt (9), wobei der Nutwulstvorsprung (7) den minimalen Kolbeninnendurchmesser dᵢₘᵢₙ definiert.

2. Kaltumgeformter Stahlbremskolben (1) nach Anspruch 1, **dadurch gekennzeichnet, dass** der in Axialrichtung ax projizierte minimale Kolbeninnendurchmesser (dᵢₘᵢₙ) in Bezug auf die Kolbenstirnfläche (8), sowie bezogen auf die Radialrichtung (R), nach radial innen versetzt, außerhalb von der Kolbenstirnfläche (8) platziert, vorgesehen ist.

3. Kaltumgeformter Stahlbremskolben (1) nach Anspruch 1, **dadurch gekennzeichnet, dass** der Nutwulstvorsprung (7) die zwei unterschiedlich abgestuften, sowie zylindrisch ausgebildeten, Wandabschnitte (9,10) miteinander verbindet.

4. Kaltumgeformter Stahlbremskolben (1) nach Anspruch 1, **dadurch gekennzeichnet, dass** der bodenseitige Wandabschnitt (9) im Vergleich zum endseitigen Wandabschnitt (10) über eine reduzierte Wandstärke (s) verfügt.

5. Kaltumgeformter Stahlbremskolben (1) nach Anspruch 1, **dadurch gekennzeichnet, dass** der Durchmesserunterschied zwischen minimalem Innendurchmesser (dᵢₘᵢₙ) und maximalem Innendurchmesser (dᵢₘₐₓ) mindestens etwa 2mm betragen.

6. Kaltumgeformter Stahlbremskolben (1) nach Anspruch 1, **dadurch gekennzeichnet, dass** die gestreckte Länge vom endseitigen Wandabschnitt (10) mindestens etwa 5 mm beträgt.

7. Kaltumgeformter Stahlbremskolben (1) nach Anspruch 1, **dadurch gekennzeichnet, dass** der bodenseitige Wandabschnitt (9) über eine radial auswärts gerichtete Nut (13) verfügt, welche mit axialem Abstand zum Nutwulstvorsprung (7) vorgesehen ist.

8. Kaltumgeformter Stahlbremskolben (1) nach einem oder mehreren der vorhergehenden Ansprüche, **dadurch gekennzeichnet, dass** ein besonders definiertes Kolbenwandstärkenverhältnis, nämlich ein Quotient der Wandstärke s_{b} vom Boden (2) bezogen auf eine minimale Kolbenwandstärke sₘᵢₙ vom bodenseitigen Wandabschnitt (9), also s_{b}/sₘᵢₙ, mit 1,4 - 2,1 vorgesehen ist.

## Claims

1. Cold-formed steel brake piston (1) for a hydraulic disk brake, constructed as a pot which is open on one side and comprises base (2) and wall (3), including inner wall (4) and outer wall (5), having wall thickness (s) which is directed substantially circularly symmetrically with respect to the piston longitudinal axis (A) and which is sectionally varied with differently varied inner diameter (di), wherein the wall sections (9, 10), which are formed in a manner directed so as to be ironed substantially parallel to the piston longitudinal axis (A), adjoin the base (2), which is configured orthogonally at right angles to the piston longitudinal axis (A), and wherein, on the end-side wall section (10), the outer wall (5) has a radially inwardly roll-formed groove (6) which is open in a radially outward direction and which forms a groove-bead projection (7) radially at the inside, and wherein the open side of the pot ends as a bearing for a friction-lining backplate, and this bearing extends as a planar piston end face (8) orthogonally at right angles to the piston longitudinal axis (A), and having integrated interfaces which serve a) for the fixing between friction lining and steel brake piston (1) and b) as support bearing for spring mounting of the friction lining, wherein, proceeding from the piston end face (8), the minimum piston inner diameter (dᵢₘᵢₙ) is axially set back in the direction of the base (2) by a number of times the piston-wall thickness (s), and wherein the minimum piston inner diameter (dᵢₘᵢₙ) is formed by the groove-bead projection (7), **characterized in that** the end-side wall section (10) has a smaller piston inner diameter (di) than the base-side wall section (9), wherein the groove-bead projection (7) defines the minimum piston inner diameter (dᵢₘᵢₙ).

2. Cold-formed steel brake piston (1) according to Claim 1, **characterized in that** the minimum piston inner diameter (dᵢₘᵢₙ), projected in axial direction (ax), is provided so as to be offset radially inwards in relation to the piston end face (8), and in relation to the radial direction ^{®}, and so as to be positioned outside the piston end face (8).

3. Cold-formed steel brake piston (1) according to Claim 1, **characterized in that** the groove-bead projection (7) connects the two differently stepped, and cylindrically formed, wall sections (9, 10) to one another.

4. Cold-formed steel brake piston (1) according to Claim 1, **characterized in that** the base-side wall section (9) has a reduced wall thickness (s) in comparison with the end-side wall section (10).

5. Cold-formed steel brake piston (1) according to Claim 1, **characterized in that** the diameter difference between minimum inner diameter (dᵢₘᵢₙ) and maximum inner diameter (dᵢₘₐₓ) is at least approximately 2 mm.

6. Cold-formed steel brake piston (1) according to Claim 1, **characterized in that** the extended length of the end-side wall section (10) is at least approximately 5 mm.

7. Cold-formed steel brake piston (1) according to Claim 1, **characterized in that** the base-side wall section (9) has a radially outwardly directed groove (13) which is provided with axial spacing to the groove-bead projection (7).

8. Cold-formed steel brake piston (1) according to one or more of the preceding claims, **characterized in that** a particularly defined piston-wall thickness ratio, specifically a quotient of the wall thickness (s_{b}) of the base (2) and a minimum piston-wall thickness (sₘᵢₙ) of the base-side wall section (9), that is to say s_{b}/sₘᵢₙ, is provided so as to have a value of 1.4 - 2.1.

## Revendications

1. Piston de frein en acier (1) formé à froid pour un frein à disque hydraulique, présentant une structure sous forme de pot ouvert d'un côté, comprenant un fond (2) et une paroi (3), y compris une paroi intérieure (4) et une paroi extérieure (5), présentant une épaisseur de paroi (s) orientée sensiblement suivant une symétrie de révolution par rapport à l'axe longitudinal de piston (A), et variant dans certaines parties avec un diamètre intérieur di variant différemment, les parties de paroi (9, 10) formées de manière orientée de façon allongée sensiblement parallèlement à l'axe longitudinal de piston (A) se raccordant au fond (2) façonné orthogonalement par rapport à l'axe longitudinal de piston (A), et la paroi extérieure (5) possédant, au niveau de la partie de paroi (10) côté extrémité, une rainure (6) galetée radialement vers l'intérieur, laquelle est ouverte radialement vers l'extérieur, et forme radialement à l'intérieur une saillie de bourrelet de rainure (7), et le côté ouvert du pot se terminant comme appui pour une plaque arrière de garniture de friction, et cet appui s'étendant en tant que surface frontale de piston plane (8) orthogonalement par rapport à l'axe longitudinal de piston (A), et comportant des interfaces intégrées qui a) servent à la fixation entre la garniture de friction et le piston de frein en acier (1) et b) servant de palier d'appui pour la suspension élastique de la garniture de friction, le diamètre intérieur de piston minimal (dᵢₘᵢₙ) étant reculé axialement d'un multiple de l'épaisseur de paroi de piston (s) en direction du fond (2) à partir de la surface frontale de piston (8), et le diamètre intérieur de piston minimal (dᵢₘᵢₙ) étant formé par la saillie de bourrelet de rainure (7), **caractérisé en ce que** la partie de paroi (10) côté extrémité présente un plus petit diamètre intérieur de piston (dᵢ) que la partie de paroi (9) côté fond, la saillie de bourrelet de rainure (7) définissant le diamètre intérieur de piston minimal dᵢₘᵢₙ.

2. Piston de frein en acier (1) formé à froid selon la revendication 1, **caractérisé en ce que** le diamètre intérieur de piston minimal (dᵢₘᵢₙ) projeté dans la direction axiale ax est décalé radialement vers l'intérieur par rapport à la surface frontale de piston (8), ainsi que par rapport à la direction radiale (R), et est placé à l'extérieur de la surface frontale de piston (8).

3. Piston de frein en acier (1) formé à froid selon la revendication 1, **caractérisé en ce que** la saillie de bourrelet de rainure (7) relie l'une à l'autre les deux parties de paroi (9, 10) étagées différemment et réalisées de manière cylindrique.

4. Piston de frein en acier (1) formé à froid selon la revendication 1, **caractérisé en ce que** la partie de paroi (9) côté fond présente une épaisseur de paroi (s) réduite par comparaison avec la partie de paroi (10) côté extrémité.

5. Piston de frein en acier (1) formé à froid selon la revendication 1, **caractérisé en ce que** la différence de diamètre entre le diamètre intérieur minimal (dᵢₘᵢₙ) et le diamètre intérieur maximal (dᵢₘₐₓ) vaut au moins approximativement 2 mm.

6. Piston de frein en acier (1) formé à froid selon la revendication 1, **caractérisé en ce que** la longueur développée de la partie de paroi (10) côté extrémité vaut au moins approximativement 5 mm.

7. Piston de frein en acier (1) formé à froid selon la revendication 1, **caractérisé en ce que** la partie de paroi (9) côté fond possède une rainure (13) orientée radialement vers l'extérieur, laquelle est prévue à une distance axiale de la saillie de bourrelet de rainure (7).

8. Piston de frein en acier (1) formé à froid selon l'une ou plusieurs des revendications précédentes, **caractérisé en ce qu'**un rapport d'épaisseurs de paroi de piston défini spécialement, à savoir un quotient de l'épaisseur de paroi s_{b} du fond (2) par rapport à une épaisseur de paroi de piston minimale sₘᵢₙ de la partie de paroi (9) côté fond, c'est-à-dire s_{b}/ sₘᵢₙ, est de 1,4 à 2,1.
